# EUROPÄISCHE PATENTSCHRIFT

(11) **EP 1 688 281 B1**
(45) Veröffentlichungstag und Bekanntmachung des Hinweises auf die Patenterteilung: **18.07.2007**
(21) Anmeldenummer: 06100888.4
(22) Anmeldetag: 26.01.2006
(51) Int. Cl.: B60G 11/27, F16F 9/05

(54) **Pneumatische Federungs- und Dämfpungseinrichtung für Fahrzeuge**
Pneumatic suspension and damping device for vehicles
Dispositif de suspension et d'amortisseur pour véhicule automobile

(30) Priorität: 04.02.2005 DE 102005005153
(43) Veröffentlichungstag der Anmeldung: 09.08.2006
(73) Patentinhaber: Bayerische Motoren Werke Aktiengesellschaft, 80809 München (DE)
(72) Erfinder: Vos, Serge, 80995, München (DE)

(56) Entgegenhaltungen:
- EP-A- 1 215 413
- EP-A- 1 344 957
- EP-A- 1 457 362
- DE-A1- 2 406 835
- US-A- 5 217 210

## Beschreibung

Die Erfindung betrifft eine pneumatische Federungs- und Dämpfungseinrichtung für Fahrzeuge, welche im oberen Bereich karosseriefest und im unteren Bereich an einer Radaufhängung befestigbar ist, enthaltend zumindest zwei mit Druckgas gefüllte, über einen Luftanschluss an eine Druckgasquelle anschließbare, hermetisch abgeschlossene und jeweils in ihrem Volumen veränderbare, pneumatisch miteinander verbundene Luftfedern, welche jeweils eine von einem Roll- oder Faltenbalg gebildete bewegliche Wand enthalten und jeweils auf einer Abrollkontur abrollen. Zu diesem bekannten Stand der Technik wird auf die EP 1 344 957 A1 verwiesen. Zumindest interner Stand der Technik ist es dabei, dass die Kammern dieser Luftfedern über zumindest ein Drosselorgan sowie weitere Ventile pneumatisch miteinander verbunden sind.

Üblicher Stand der Technik bei mit Luftfederung ausgestatteten Kraftfahrzeugen sind Luftfedern mit einer (einzigen) volumenveränderbaren Kammer, denen geeignete Schwingungsdämpfer, insbesondere solche mit veränderbarer Dämpfkraft-Kennlinie parallel geschaltet sind. Daneben ist eine Federungs- und Dämpfungsvorrichtung mit den (wesentlichen) Merkmalen des Oberbegriffs des Anspruchs 1 bekannt, die je Fahrzeug-Rad zwei pneumatisch miteinander verbundene Luftfeder-Kammern aufweist und sich somit durch äußerst komfortable Federungseigenschaften auszeichnet, wobei vorteilhafterweise durch die systembedingte Integration der Dämpfungsfunktion (aufgrund der geeignet gedrosselten pneumatischen Verbindung zwischen diesen beiden Luftfeder-Kammern) kein zusätzlicher hydraulischer Schwingungsdämpfer herkömmlicher Bauart benötigt wird.

Eine derartige Federungs- und Dämpfungsvorrichtung zeichnet sich also gegenüber sog. Einkammer-Luftfedern mit parallelen Hydraulik-Dämpfern hinsichtlich der Auslegung der Federkraft- bzw. Dämpfkraft-Kennlinien über dem Federweg bzw. über der Ein- oder Ausfedergeschwindigkeit durch vielfältigere und somit günstigere Anpassungsmöglichkeiten aus, jedoch sind diesbezüglich noch weitere Verbesserungen möglich, die hiermit aufgezeigt werden sollen (= Aufgabe der vorliegenden Erfindung).

Die Lösung dieser Aufgabe ist für eine pneumatische Federungs- und Dämpfungseinrichtung nach dem Oberbegriff des Anspruchs 1 dadurch gekennzeichnet, dass die pneumatische Verbindung der beiden Luftfeder-Kammern zumindest eine Verstellventileinrichtung aus einem Drosselorgan und einem eine Druckdifferenz hieran abgreifenden Druckregelventil umfasst, wobei dem Drosselorgan ein durch einen Aktuator ansteuerbares Drosselverstellventil in Reihe geschaltet ist und der vom Druckregelventil gesteuerte Hauptvolumenstrom zum Drosselverstellventil und zum Drosselorgan parallel geführt ist. Bevorzugt ist dabei der Verstellventileinrichtung ein Druckregelventil und/oder ein weiteres Drosselelement parallel geschaltet und es ist für die pneumatische Verbindung der beiden Luftfeder-Kammern in beide Richtungen eine solche Verstellventileinrichtung vorgesehen.

Vorgeschlagen wird somit eine Verstellmöglichkeit hinsichtlich der Dämpfungscharakteristik, was durch Veränderung des freien Durchströmquerschnittes der sog. pneumatischen Verbindung zwischen den beiden Luftfeder-Kammern erzielt werden kann. Hierfür wird im Hinblick auf eine technisch möglichst einfache und dennoch stabile, zuverlässige Lösung der Einsatz eines Drosselverstellventils vorgeschlagen, jedoch besitzt ein solches nachteiligerweise eine progressive Dämpfungscharakteristik. Um dem abzuhelfen, wird nun die angegebene pneumatische Verschaltung vorgeschlagen, mit einem dem Drosselverstellventil vorgeschalteten Drosselorgan, welches im übrigen nach Art einer Messblende mit linearer Kennung wirken soll, sowie mit einem dem Strömungszweig mit dem Drosselverstellventil und dem vorgeschalteten Drosselorgan parallel geschalteten Strömungszweig mit einem Druckregelventil, das mit der am besagten Drosselorgan anliegenden Druckdifferenz beaufschlagt wird. Dessen Vorspannung steht im Gleichgewicht mit dem Druckabfall über dem Drosselorgan, so dass bei einer theoretisch zunehmenden Durchflussmenge durch das Drosselorgan das Druckregelventil bis zum Gleichgewichtspunkt weiter öffnet, wodurch sich eine größere Durchströmmenge durch dieses einstellt und die Durchflussmenge durch das Drosselverstellventil somit im wesentlichen konstant bleibt.

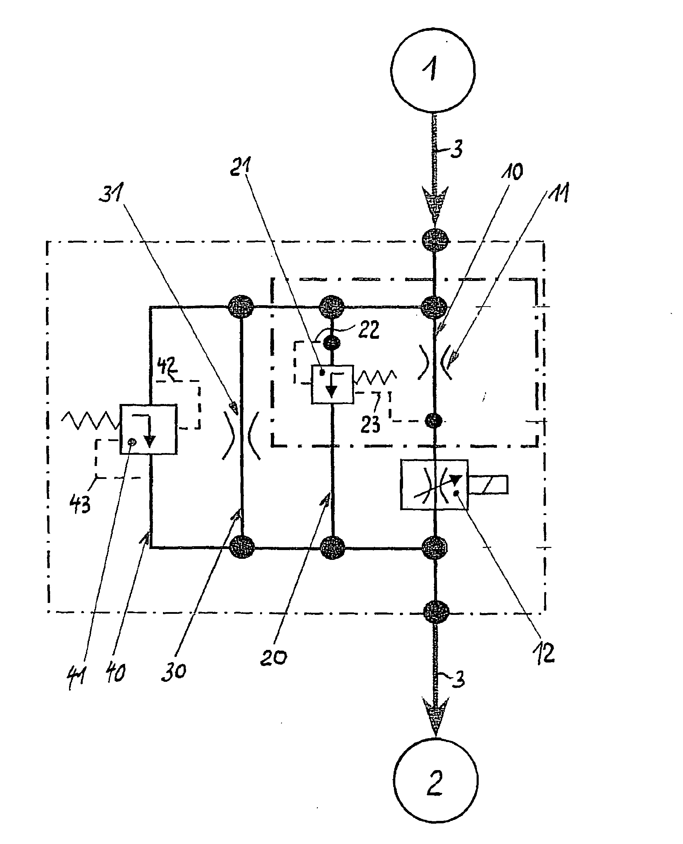

Die beigefügte einzige Figur zeigt prinzipiell eine Drossel- und Ventil-Verschaltung als sog. Verstellventileinrichtung zwischen einer ersten mit der Bezugziffer 1 gekennzeichneten Luftfeder-Kammer und einer zweiten mit der Bezugsziffer 2 gekennzeichneten Luftfeder-Kammer einer erfindungsgemäßen Federungs- und Dämpfungseinrichtung. Deren im Oberbegriff des Anspruchs 1 angegebenen Bauelemente sind dabei der Einfachheit halber nicht figürlich dargestellt, da deren grundsätzlicher Aufbau so wie in der genannten EP 1 344 957 A1 gezeigt sein kann; vielmehr sind in der beigefügten Figur nur die Ventile und Drosselorgane in einer pneumatischen Verbindung von der Luftfeder-Kammer 1 zur zweiten Luftfeder-Kammer 2 dargestellt.

Ebenfalls nicht figürlich dargestellt sind geeignet angeordnete Rückschlagventile oder dergleichen, die gewährleisten, dass die gezeigte Verstellventileinrichtung nur in der durch die Pfeile 3 dargestellten Strömungsrichtung durchströmt werden kann, und somit nur von der Luftfeder-Kammer 1 zur Luftfeder-Kammer 2 hin. Für den entgegen gerichteten Strömungsweg ist vorzugsweise eine analoge Verstellventileinrichtung vorgesehen, wobei abermals geeignete Rückschlagventile oder dgl. sicherstellen, dass eine Durchströmung der Verstellvorrichtung in gleicher Weise wie figürlich dargestellt dann nur von der Luftfeder-Kammer 2 zur Luftfeder-Kammer 1 erfolgen kann. Diese beiden Verstellventileinrichtungen bestimmen dann die sog. Druckstufe und Zugstufe des in der Federungs- und Dämpfungseinrichtung quasi integrierten Dämpfers, wobei die einzelnen Ventilquerschnitte bzw. Ventilöffnungs-Kennwerte in der Zugstufe durchaus unterschiedlich zu denen in der Druckstufe sein können, d.h. für die Zugstufe und für die Druckstufe sind - wie grundsätzlich bekannt - unterschiedliche Dämpfkraft-Kennlinien realisierbar.

Die bzw. eine vorgeschlagene Verstellventilvorrichtung in der Verbindung zwischen der ersten Luftfeder-Kammer 1 und der zweiten Luftfeder-Kammer 2 weist einen ersten Strömungszweig 10 auf, in dem seriell zunächst ein nach Art einer Messblende mit linearer Kennung wirkendes Drosselorgan 11 und anschließend daran ein Drosselverstellventil 12 vorgesehen ist. Dem ersten Strömungszweig 10 parallel geschaltet ist ein zweiter Strömungszweig 20, in dem ein Druckregelventil 21 vorgesehen ist. Dieses wird von der am Drosselorgan 11 anliegenden Druckdifferenz über Steuerleitungen 22, 23 angesteuert. Bereits mit diesen soweit erläuterten Elementen lässt sich über einen weiten Bereich eine gewünschte Dämpfkraft gezielt einstellen, und zwar trotz der nachteiligerweise nicht linearen Dämpfungscharakteristik des Drosselverstellventils 12, die auf deren über dem Verstellweg nicht linearen Widerstandsverlauf zurückzuführen ist.

Zusätzlich zu diesen beiden Strömungszweigen 10 und 20 sind in einer bevorzugten Ausführungsform diesen noch zwei weitere Strömungszweige 30 und 40 parallel geschaltet. Im Strömungszweig 30 ist (ebenfalls) ein Drosselorgan 31 mit linearer Charakteristik (und konstantem Drosselquerschnitt) vorgesehen, während im Strömungszweig 40 ein Druckregelventil 41 eingebunden ist, das mit der sich am Drosselorgan 31 einstellenden Druckdifferenz angesteuert wird, und zwar über Steuerleitungen 42 und 43.

Während für den Einsatz einer erfindungsgemäßen pneumatischen Federungs- und Dämpfungseinrichtung in einer Radaufhängung eines Kraftfahrzeugs die zu Anfang erläuterten Strömungszweige 10 und 20 mit den darin vorgesehenen Ventilen bzw. Drosselorganen zur Abstimmung bzw. Einstellung der Dämpfungscharakteristik im üblichen die Bewegung des Fahrzeug-Aufbaus beeinflussenden Regelbereich eines Fahrzeug-Fahrwerks vorgesehen sind, können mit den Strömungszweigen 30 und 40 und dem darin vorgesehenen Drosselorgan 31 bzw. Druckregelventil 41 quasi die Extremzustände abgestimmt werden. Das mit linearer Kennung versehene Drosselorgan 31 übernimmt die Funktion, Wankbewegungen bzw. Nickbewegungen des Fahrzeug-Aufbaus im Ansatz zu bedämpfen. Da jedoch dieses Drosselorgan 31 bei größeren Federwegen und somit größeren verdrängten Luftmassen einen stark progressiven Widerstand (und somit schnell eine harte Dämpfungscharakteristik) erzeugt, werden für etwas größere Federwege die Strömungszweige 10 und 20 wirksam, d.h. dann erfolgt ein Fluidaustausch und somit eine Dämpfung entsprechend der Einstellung bzw. Ansteuerung des Drosselverstellventils 12 über diese beiden Strömungszweige 10, 11.

Für noch größere Federwege der Federungs- und Dämpfungseinrichtung wird dann das Druckregelventil 41 im Strömungszweig 40 wirksam, und zwar nach Art eines sog. Blow-off-Ventils. Dieses Druckregelventil 41 kann somit sicherstellen, dass das dieser Federungs- und Dämpfungseinrichtung zugeordnete Fahrzeug-Rad im wesentlichen unter allen Umständen Bodenhaftung hat, wobei noch darauf hingewiesen sei, dass durchaus eine Vielzahl von Details abweichend von obigen Erläuterungen gestaltet sein können, ohne den Inhalt der Patentansprüche zu verlassen.

## Patentansprüche

1. Pneumatische Federungs- und Dämpfungseinrichtung für Fahrzeuge, welche im oberen Bereich karosseriefest und im unteren Bereich an einer Radaufhängung befestigbar ist, enthaltend zumindest zwei mit Druckgas gefüllte, über einen Luftanschluss an eine Druckgasquelle anschließbare, hermetisch abgeschlossene und jeweils in ihrem Volumen veränderbare Luftfedern, welche jeweils eine von einem Roll- oder Faltenbalg gebildete bewegliche Wand enthalten und jeweils auf einer Abrollkontur abrollen, wobei die Kammern (1, 2) dieser Luftfedern über zumindest ein Drosselorgan (31) sowie weitere Ventile (41, 12, 21) pneumatisch miteinander verbunden sind,
**dadurch gekennzeichnet, dass** die pneumatische Verbindung der beiden Luftfeder-Kammern (1, 2) zumindest eine Verstellventileinrichtung aus einem Drosselorgan (11) und einem eine Druckdifferenz hieran abgreifenden Druckregelventil (21) umfasst, wobei dem Drosselorgan (11) ein durch einen Aktuator ansteuerbares Drosselverstellventil (12) in Reihe geschaltet ist und der vom Druckregelventil (21) gesteuerte Hauptvolumenstrom zum Drosselverstellventil (12) und zum Drosselorgan (11) parallel geführt ist.

2. Federungs- und Dämpfungseinrichtung nach Anspruch 1,
**dadurch gekennzeichnet, dass** der Verstellventileinrichtung ein Druckregelventil (41) und/oder ein weiteres Drosselelement (31) parallel geschaltet ist.

3. Federungs- und Dämpfungseinrichtung nach Anspruch 1 oder 2,
**dadurch gekennzeichnet, dass** für die pneumatische Verbindung von der ersten zur zweiten Luftfeder-Kammer sowie von der zweiten zur ersten Luftfeder-Kammer jeweils eine Verstellventileinrichtung vorgesehen ist.

## Claims

1. A pneumatic suspension and damping device for vehicles, which, in the upper region, can be fastened so as to be secured to the body and, in the lower region, can be fastened to a wheel suspension, containing at least two air springs which are filled with compressed gas, are connectable via an air connection to a compressed gas source, hermetically sealed and can be changed in each case with respect to their volume and which in each case contain a movable wall formed by an air sleeve or bellows and, in each case, roll on a roll contour, in which the chambers (1, 2) of these air springs are pneumatically connected to one another via at least one throttle member (31) and further valves (41, 12, 21), **characterised in that** the pneumatic connection of the two air spring chambers (1, 2) comprises at least one adjustment valve device comprising a throttle member (11) and a pressure control valve (21) tapping a pressure difference here, wherein a throttle adjustment valve (12) which can be actuated by an actuator is connected in series with the throttle member (11) and the main volume flow controlled by the pressure control valve (21) is guided in parallel to the throttle adjustment valve (12) and to the throttle member (11).

2. A suspension and damping device according to claim 1, **characterised in that** a pressure control valve (41) and/or a further throttle element (31) is connected in parallel with the adjustment valve device.

3. A suspension and damping device according to claim 1 or 2, **characterised in that** an adjustment valve device is provided in each case for the pneumatic connection of the first to the second air spring chamber and of the second to the first air spring chamber.

## Revendications

1. Dispositif de suspension et d'amortissement pour des véhicules qui, dans la zone supérieure, est solidaire de la carrosserie et peut être fixé dans la zone inférieure à une suspension de roue, comprenant au moins deux amortisseurs pneumatiques reliés pneumatiquement, remplis de gaz sous pression, pouvant être raccordés par une prise d'air à une source de gaz de pression, fermés hermétiquement et variables au niveau de leur volume, qui comprennent chacun une paroi mobile formée par un soufflet roulant ou plissé et qui se déroulent chacun sur un contour de déroulement, les chambres (1, 2) de ces amortisseurs pneumatiques étant reliées pneumatiquement l'une à l'autre par au moins un organe d'étranglement (31) et par d'autres soupapes (41, 12, 21),
**caractérisé en ce que**
la liaison pneumatique des deux chambres d'amortisseur pneumatique (1, 2) comprend au moins un dispositif de soupape de réglage composé d'un organe d'étranglement (11) et d'une soupape de régulation de pression (21) prélevant une différence de pression sur celui-ci, et une soupape de réglage d'étranglement (12) pouvant être commandée par un actionneur est montée en série avec l'organe d'étranglement (11), et le débit volumique principal commandé par la soupape de régulation de pression (21) étant guidé parallèlement à la soupape de réglage d'étranglement (12) et à l'organe d'étranglement (11).

2. Dispositif de suspension et d'amortissement selon la revendication 1,
**caractérisé en ce qu'**
une soupape de régulation de pression (41) et/ou un autre élément d'étranglement (31) sont montés parallèlement au dispositif de soupape de réglage.

3. Dispositif de suspension et d'amortissement selon la revendication 1 ou 2,
**caractérisé en ce qu'**
un dispositif de soupape de réglage est prévu pour la liaison pneumatique respectivement de la première vers la deuxième chambre d'amortisseur pneumatique ainsi que de la deuxième vers la première chambre d'amortisseur pneumatique.
